# EUROPÄISCHE PATENTSCHRIFT

(11) **EP 0 222 301 B1**
(45) Veröffentlichungstag und Bekanntmachung des Hinweises auf die Patenterteilung: **26.05.1993**
(21) Anmeldenummer: 86115256.9
(22) Anmeldetag: 04.11.1986
(51) Int. Cl.: F16B 37/04, F16B 5/02, B41J 29/04, B41J 29/02, B41J 29/62

(54) **Verbindung für dünnwandige, ebene, als Wand-, Decken- oder Bodenteile dienende Flächenbauteile**
Joint for thin-walled, flat structural sheets serving as panel, cover or bottom parts
Jonction de feuilles de construction à parois minces et planes qui servent comme élément de paroi, d'enveloppe ou de fond

(30) Priorität: 07.11.1985 DE 3539505
(43) Veröffentlichungstag der Anmeldung: 20.05.1987
(73) Patentinhaber: MANNESMANN Aktiengesellschaft, 40027 Düsseldorf (DE)
(72) Erfinder: Gomoll, Günter, Dipl.-Ing. (FH), D-7916 Nersingen/Leibi (DE); Hauslaib, Wolfgang, Dipl.-Ing. (FH), D-7907 Langenau (DE)

(56) Entgegenhaltungen:
- DE-A- 1 962 687
- DE-U- 1 828 896
- FR-A- 2 457 994
- GB-A- 1 561 228
- US-A- 4 188 148

## Beschreibung

Die Erfindung betrifft eine Verbindung für zwei dünnwandige, ebene, als Wand-, Decken-oder Bodenteile dienende Flächenbauteile, die zueinander senkrecht verlaufen, insbesondere für einen Druckerrahmen der Matrixdruckerbauart, bei der in dem ersten Flächenbauteil jeweils eine konturierte Öffnung vom Rand ausgehend für die Aufnahme des Schaftes einer Kopfschraube sowie einer Gewindemutter und eines Halters vorgesehen ist, der zwei gegen den Rand der Öffnung federndanliegende Rastarme aufweist und bei der die Kopfschraube durch eine Durchgangsöffnung in dem senkrecht verlaufenden zweiten Flächenbauteil eingeführt und in der Gewindemutter festgezogen ist.

Derartige Verbindungen dienen der schnellen Montage von Bodenwänden mit Seitenteilen, die für andere Geräteteile in ausreichender Genauigkeit fixiert werden müssen. Der Aufwand für die Verbindungen ist gering zu halten. Bei den Einzelteilen muß es sich um Massenartikel mit geringstmöglichen Einzelkosten handeln.

Die eingangs beschriebene Gattung ist aus de DE-Gbm-Schrift 18 28 896 bekannt. Diese Lösung umfaßt jedoch nur Schlitzmuttern.

Eine andere Verbindung ist aus der DE-PS 34 11 914 bekannt, die auf an zusammenhängenden Wandteilen gebildeten Zentrieransätzen mit Ausnehmungen und an dem senkrecht verlaufenden Deckelblech vorgesehenen Zentrierausnehmungen basiert. Die Ausnehmungen an den Zentrieransätzen dienen zur Aufnahme eines sicheren Tragbügels. Die selbsthemmende Aufnahme des Tragbügels ist jedoch keineswegs eine Sicherung bei Erschütterungen des Gerätes. Besonders nach teilig ist die Herstellung der Zentrieransätze, die aus dem vollen Blech rings um den Rand herausgestanzt werden müssen. Ein solcher Herstellvorgang ist wegen des hohen Verschnitts unwirtschaftlich. Die bekannte Verbindung ist außerdem nur für Böden und Deckel, jedoch nicht für Seitenwände, Zwischenwände u.dgl. verwendbar.

Der Erfindung liegt die Aufgabe zugrunde, eine fertigungstechnisch wirtschaftliche, d.h. auch toleranzunabhängige und ebenfalls leicht lösbare Verbindung für Flächenbauteile zu schaffen, die universell brauchbar, und zwar nicht nur für Wand-und Deckelteile, sondern auch für einzelne Zwischenwände, Seitenwände u.dgl. geeignet ist. Die Lösbarkeit soll auch den Einbau und Ausbau von Boden-, Decken-und/oder Wandteilen an vollständig montierten Geräten erfassen.

Die gestellte Aufgabe wird erfindungsgemäß dadurch gelöst, daß eine Mehrkantmutter in dem Halter festgelegt ist und der Halter zusammen mit der Mehrkantmutter seitlich in die konturierte Öffnung einschiebbar und mit den Rastarmen am ersten Flächenbauteil derart einrastbar ausgebildet ist, daß die federnden Rastarme gegen die Innenfläche der Konturierten Öffnung anliegen und mit einer Rastnase auf der äußeren Oberfläche des ersten Flächenbauteils aufliegen. Diese Lösung gestattet wirtschaftliche, große Herstelltoleranzen. Der Halter, die Kopfschraube und die (genormte) Mehrkantmutter stellen äußerst preiswerte Massenteile dar. Die Lösbarkeit der Verbindung ist praktisch unbegrenzt. Erforderlichenfalls können leicht Kopfschraube und Mehrkantmutter ersetzt werden. Die Verbindung wirkt außerdem bezüglich der senkrecht aufeinander verlaufenden Flächenbauteile sehr genau fixierend.

In Verbesserung der Erfindung ist vorgesehen, daß der Halter einstückig aus einem plastifizierbaren Kunststoff hergestellt ist, eine Anlageplatte für die Mehrkantmutter aufweist, in dieser eine zentrische Öffnung für die Kopfschraube und in Einführrichtung sich gegenüberliegende Fixierungen für die Mehrkantform der Mehrkantmutter vorgesehen sind. Diese Gestaltung macht auch den Halter zum leicht und kostengünstig herstellbaren Massenteil, der sämtliche Funktionen für das Fixieren der Mehrkantmutter aufweist.

Die Positionierung der Mehrkantmutter kann noch dadurch verbessert werden, daß die Fixierung in dem Halter aus paarweise sich gegenüberliegenden, die Polygonspitzen der Mehrkantmutter stützenden Überlappungen bestehen. Die Überlappungen halten während einer gemeinsamen Montage die Mehrkantmutter im Halter. Nach dem Einführen des Halters in die konturierte Öffnung des Flächenbauteils ist die Mehrkantmutter gegen Herausfallen und gegen axiale Verlagerungen gesichert.

Eine alternative Lösung für das Positionieren der Mehrkantmutter ist dahingehend gestaltet, daß die Fixierungen in dem Halter aus paarweise den Polygonspitzen der Mehrkantmutter zugeordneten, über die Dicke der Mehrkantmutter hochgezogenen Seitenwänden bestehen, die sich paarweise gegenüberliegen.

Die genaue Lage des Halters in dem mit der Kontur-Öffnung versehenen Flächenbauteil wird dadurch erzielt, daß der Halter ein Paar Rastarme aufweist, die in gegenläufige Richtungen weisende Rastnasen besitzen.

Die Positionierung des Halters wird außerdem dadurch verbessert, daß am Halter, einer oder zwei Rastnasen gegenüberliegend, Vorsprünge vorgesehen sind, die in der Ebene einer Oberfläche des Flächenbauteils paarweise angeordnet sind und zu den Rastnasen im Abstand der Dicke des Flächenbauteils liegen.

Herstelltechnisch ist es hierbei für das Spritzgußwerkzeug und den Halter vorteilhaft, daß die Vorsprünge der Halter auf den federnden Rastarmen angeordnet sind.
Die Verankerung des Halters in einem der Flächenbauteile wird außerdem dadurch verbessert, indem die Vorsprünge der Halter beidseitig der Anlageplatte für die Mehrkantmutter vorgesehen sind.

Ausführungsbeispiele der Erfindung sind in der Zeichnung schematisch dargestellt und werden nachfolgend näher erläutert. Es zeigen
- Fig. 1: die fertigmontierte Verbindung von oben gesehen,
- Fig. 2: die Verbindung gemäß Fig. 1 von der Seite gesehen,
- Fig. 3: eine alternative Ausführungsform des Halters von oben gesehen,
- Fig. 4: eine Seitenansicht des Halters gemäß Fig. 3,
- Fig. 5: einen Schnitt V - V gemäß Fig. 3 durch den Halter,
- Fig. 6: eine Vorderansicht des Halters gemäß den Fig. 3 bis 5 und
- Fig. 7: eine Ansicht von unten gegen den eingebauten Halter gemäß den Fig. 3 bis 6.

Die Verbindung eignet sich stets für aufeinander senkrecht stehende Flächenbauteile 1 und 2, die aus dünnen, ebenen Blechplatten (aus Metall) oder aus Kunststoffplatten bestehen.

Das senkrechtstehende Flächenbauteil 1 bildet z.B. die Seitenwand eines Matrixdruckerrahmens. Vom Rand 3 verläuft eine konturierte Öffnung 4 für den Schaft 5a einer Kopfschraube 5. Die Kontur der Öffnung 4 ist außerdem auf einen Halter 6 und auf eine darunter befindliche Mehrkantmutter 7 abgestellt. Für sehr hohe Ansprüche kann der senkrechtstehende Flächenbauteil 1 noch mit Füßen 1a und 1b ausgestaltet sein, die in entsprechende Ausschnitte 2a und 2b des Flächenbauteils 2 ragen. Die Füße 1a, 1b und die Ausschnitte 2a, 2b sind jedoch grundsätzlich nicht erforderlich.

Der Halter 6 weist federnde Rastarme 8 auf, die mit Rastnasen 9 auf der Oberfläche 1c des Flächenbauteils 1 anliegen. Nach dem Einführen und Einrasten des Halters 6 zusammen mit der Mehrkantmutter 7, die z.B. aus einer genormten Sechskantmutter besteht (wie gezeichnet), wird die Kopfschraube 5 durch eine Durchgangsöffnung 10 in dem Flächenbauteil 2 unter Beifügung einer Unterlegscheibe 11 in die Mehrkantmutter 7 eingeschraubt und festgezogen. Nach dem Festziehen sind die beiden Flächenbauteile 1 und 2 starr miteinander verbunden.

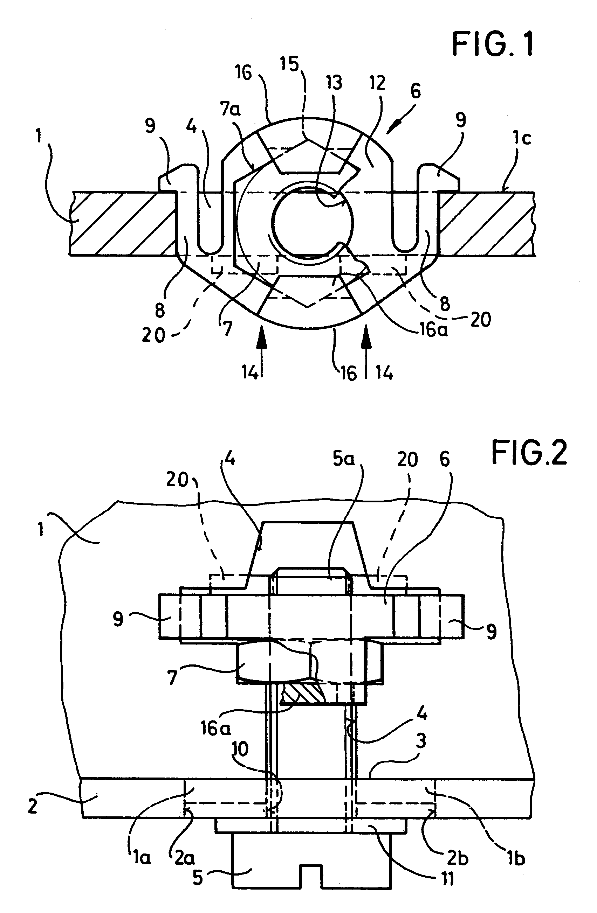

Der Halter 6 (Fig. 1) ist aus plastifizierbarem Kunststoff hergestellt und bildet als tragendes Teil eine Anlageplatte 12 mit einer Bezugsebene für die Mehrkantmutter 7. In der Anlageplatte 12 befindet sich eine zentrische Öffnung 13 für den Schaft 5a der Kopfschraube 5. In Einführrichtung 14 sind die Polygonspitzen 15 mit Fixierungen 16 versehen, die die Mehrkantform 7a der Mehrkantmutter 7 stützen und fixieren.

Im Ausführungsbeispiel der Fig. 1 und 2 bestehen die Fixierungen 16 aus Überlappungen 16a, die die Polygonspitzen 15 übergreifen und damit die Mehrkantmutter 7 einspannen.

In Funktionslagen liegt der Halter 6 auf der Oberfläche 1c mit den Rastnasen 9 auf und gegenüberliegend an dem Flächenbauteil 1 mit Vorsprüngen 20 an, die paarweise vorgesehen sind.

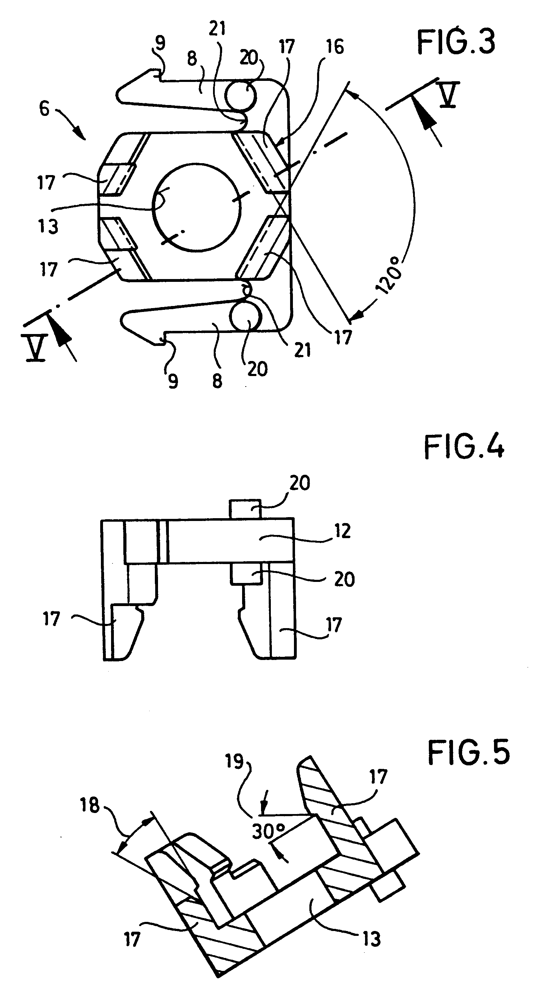

Nach einer alternativen Ausführungsform des Halters 6 (Fig. 3 bis 7) bestehen die Fixierungen 16 aus paarweise den Polygonspitzen 15 der Mehrkantmutter 7 zugeordneten Seitenwänden 17, die über die Dicke der Mehrkantmutter 7 hochgezogen sind (Fig. 4 und 5), um eine Führung beim Eindrücken der Mehrkantmutter 7 zu geben. Das Eindrücken wird durch Phasen 18 und 19 von jeweils ca. 30 Grad begünstigt, wobei die Phase 19 praktisch eine Verriegelung bildet Fig. 5).

Der Halter 6 weist Rastarme 8 auf, die jeweils mit gegenläufigen Rastnasen 9 versehen sind (Fig. 1 und 3).

Gegenüber den Rastnasen 9 (Fig. 3 bis 7) sind die Vorsprünge 20 vorgesehen, die zu den Rastnasen 9 bzw. zu der Oberfläche 1c des Flächenbauteils 1 (mit einer gewissen Toleranz) im Abstand der Dicke des Flächenbauteils 1 liegen. Das Andrücken der Vorsprünge 20 an die Oberfläche 1c sichert das Einrasten der Rastarme 8 bzw. der Rastnasen 9, wobei die Rastarme 8 federn.

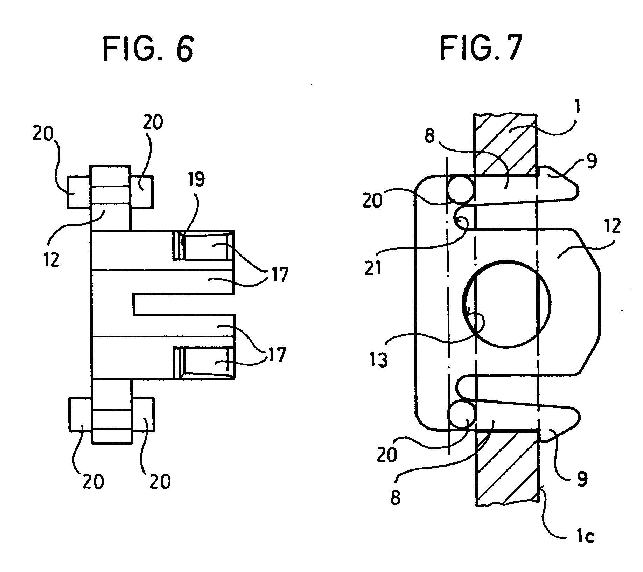

Die Rastarme 8 sind durch Ausrundungen 21 federnd gestaltet. Die konstruktive Anlenkung der Rastarme 8 führt dazu, daß die Vorsprünge 20 in Form von zylindrischen Zapfen auf den Rastarmen 8 selbst angeordnet sind (Fig 3 und 7).

Die Anordnung der Vorsprünge 20 auf der Ober- und Unterseite der Anlageplatte 12 gewährleistet eine parallele Lage des Halters 6 zur jeweiligen Oberläche 1c des Flächenbauteils 1.

## Patentansprüche

1. Verbindung für zwei dünnwandige, ebene, als Wand-, Decken- oder Bodenteile dienende Flächenbauteile (1,2), die zueinander senkrecht verlaufen, insbesondere für einen Druckerrahmen der Matrixdruckerbauart, bei der in dem ersten Flächenbauteil (1) jeweils eine konturierte Öffnung (4) vom Rand ausgehend für die Aufnahme des Schaftes (5a) einer Kopfschraube (5) sowie einer Gewindemutter und eines Halters (6) vorgesehen ist, der zwei gegen den Rand der Öffnung (4) federnd anliegende Rastarme (8) aufweist, und bei der die Kopfschraube (5) durch eine Durchgangsöffnung (10) in dem senkrecht verlaufenden zweiten Flächenbauteil (2) eingeführt und in der Gewindemutter festgezogen ist,
dadurch gekennzeichnet,
daß eine Mehrkantmutter (7) in dem Halter (6) festgelegt ist und der Halter (6) zusammen mit der Mehrkantmutter (7) seitlich in die konturierte Öffnung (4) einschiebbar und mit den Rastarmen (8) am ersten Flächenbauteil (1) derart einrastbar ausgebildet ist, daß die federnden Rastarme (8) gegen die Innenfläche der konturierten Öffnung (4) anliegen und mit einer Rastnase (9) auf der äußeren Oberfläche (1c) des ersten Flächenbauteils (1) aufliegen.

2. Verbindung nach Anspruch 1,
dadurch gekennzeichnet,
daß der Halter (6) einstückig aus einem plastifizierbaren Kunststoff hergestellt ist, eine Anlageplatte - (12) für die Mehrkantmutter (7) aufweist und in dieser eine zentrische Öffnung (13) für die Kopfschraube - (5) und in Einführrichtung (14) sich gegenüberliegende Fixierungen (16) für die Mehrkantform (7a) der Mehrkantmutter (7) vorgesehen sind.

3. Verbindung nach den Ansprüchen 1 und 2,
dadurch gekennzeichnet,
daß die Fixierungen (16) in dem Halter (6) aus paarweise sich gegenüberliegenden, die Polygonspitzen (15) der Mehrkantmutter (7) stützenden Überlappungen (16a) bestehen (Fig. 1 und 2).

4. Verbindung nach den Ansprüchen 1 und 2,
dadurch gekennzeichnet,
daß die Fixierungen (16) in dem Halter (6) aus paarweise den Polygonspitzen (15) der Mehrkantmutter (7) zugeordneten, über die Dicke der Mehrkantmutter (7) hochgezogene Seitenwände (17) bestehen, die sich paarweise gegenüberliegen (Fig. 3 bis 7).

5. Verbindung nach einem oder mehreren der Ansprüche 1 bis 4,
dadurch gekennzeichnet,
daß der Halter (6) ein Paar Rastarme (8) aufweist, die in gegenläufige Richtungen weisende Rastnasen (9) besitzen.

6. Verbindung nach mehreren der Ansprüche 1 bis 5,
dadurch gekennzeichnet,
daß am Halter (6), einer oder zwei Rastnasen (9) gegenüberliegend, Vorsprünge (20) vorgesehen sind, die in der Ebene einer Oberfläche des Flächenbauteils (1) paarweise angeordnet sind und zu den Rastnasen (9) im Abstand der Dicke des Flächenbauteils (1) liegen.

7. Verbindung nach den Ansprüchen 1 bis 6,
dadurch gekennzeichnet,
daß die Vorsprünge (20) der Hafer (6) auf den federnden Rastarmen (8) angeordnet sind.

8. Verbindung nach den Ansprüchen 1 bis 7,
dadurch gekennzeichnet,
daß die Vorsprünge (20) der Halter (6) beidseitig der Anlageplatte (12) für die Mehrkantmutter (7) vorgesehen sind.

## Claims

1. Connection for two thin-walled surface components (1, 2) serving as wall, lid or base parts, which extend perpendicularly to each other, in particular for a printer frame of the matrix printer design, in which in the first surface component (1), respectively one contoured opening (4), starting from the edge, is provided for receiving the shaft (5a) of a head screw (5) as well as a threaded nut and a holder (6), which comprises two locking arms (8) bearing resiliently against the edge of the opening (4) and in which the head screw (5) is introduced through a through hole (10) in the second surface component (2) extending perpendicularly and tightened in the threaded nut, characterised in that a polygonal nut (7) is fixed in the holder (6) and the holder (6) together with the polygonal nut (7) can be slid laterally into the contoured opening (4) and is constructed to engage with the locking arms (8) on the first surface component (1) so that the resilient locking arms (8) bear against the inner surface of the contoured opening (4) and are supported by a locking lug (9) on the outer surface (1c) of the first surface component (1).

2. Connection according to Claim 1, characterised in that the holder (6) is produced in one piece from a plasticizeable synthetic material, comprises a bearing plate (12) for the polygonal nut (7) and in the latter a central opening (13) for the head screw (5) and provided in the insertion direction (14) are opposing fixings (16) for the polygonal shape (7a) of the polygonal nut (7).

3. Connection according to Claims 1 and 2, characterised in that the fixings (16) in the holder (6) consist of overlaps (16a) lying opposite each other in pairs, supporting the tips (15) of the polygon of the polygonal nut (7) (Figures 1 and 2).

4. Connection according to Claims 1 and 2, characterised in that the fixings (16) in the holder (6) consist of side walls (17) associated in pairs with the tips (15) of the polygon of the polygonal nut (7) and drawn up beyond the thickness of the polygonal nut (7), which side walls (17) lie opposite each other in pairs (Figures 3 to 7).

5. Connection according to one or more of Claims 1 to 4, characterised in that the holder (6) comprises a pair of locking arms (8), which comprise locking lugs (9) pointing in opposite directions.

6. Connection according to several of Claims 1 to 5, characterised in that provided on the holder (6), lying opposite one or two locking lugs (9), are projections (20), which are arranged in pairs in the plane of one surface of the surface component (1) and lie at the distance of the thickness of the surface component (1) from the locking lugs (9).

7. Connection according to Claims 1 to 6, characterised in that the projections (20) of the holder (6) are disposed on the resilient locking arms (8).

8. Connection according to Claims 1 to 7, characterised in that the projections (20) of the holder (6) are provided on both sides of the bearing plate (12) for the polygonal nut (7).

## Revendications

1. Système de liaison de deux éléments plats (1, 2) à parois minces et planes constitutifs de parois, de couvercles ou de fonds perpendiculaires entre eux, notamment dans le châssis d'une imprimante à aiguilles, dont le premier élément plat (1) est muni d'une ouverture à contour profilé (4) partant de son bord de manière à recevoir la tige (5a) d'une vis à tête (5) ainsi qu'un écrou fileté et un support (6) muni de deux bras d'arrêt (8) qui s'appuient élastiquement contre les bords de l'ouverture (4) tandis que la vis à tête (5) est engagée à travers une ouverture de passage (10) dans le second élément plat (2) disposé perpendiculairement - puis serrée dans l'écrou fileté, caractérisé en ce qu'un écrou multipans (7) est fixé dans le support (6), que le support (6) avec l'écrou (7) peut être engagé par le côté dans l'ouverture à contour profilée (4) puis fixé par les bras d'arrêt (8) sont le premier élément plat (1) du fait que les bras d'arrêt (8) s'appuient élastiquement contre la face interne de l'ouverture profilée (4) et sont au contact, par un bec d'arrêt (9), avec la face supérieure externe (1c) du premier élément plat.

2. Système de liaison selon la revendication 1, caractérisé en ce que le support (6) est fait d'une seule pièce en matière plastique et comporte une plaque (12) servant à immobiliser l'écrou multipans (7), percée en son centre d'une ouverture (13) de passage de la vis à tête (5) et munie de fixations (16), se faisant face dans la direction d'engagement et adaptées à la forme multipans (7a) de l'écrou.

3. Système de liaison selon les revendications 1 et 2, caractérisé en ce que les fixations (16) portées par le support (6) sont constituées par des languettes à recouvrement (16a) se faisant face deux par deux et maintenant les angles de la face polygonale de l'écrou (7) (figures 1 et 2).

4. Système de liaison selon les revendications 1 et 2, caractérisé en ce que les fixations (16) portées par le support (6) sont constituées par des parois latérales (17) associées deux par deux aux arêtes polygonales (15) de l'écrou multipans (7) et dépassant l'épaisseur de l'écrou en se faisant face deux par deux. (figures 3 à 7).

5. Système de liaison selon une ou plusieurs des revendications 1 à 4, caractérisé en ce que le support (6) comporte deux bras d'arrêt (8) équipé de becs d'arrêt (9) orientés selon des directions opposées.

6. Système de liaison selon plusieurs des revendications 1 à 5, caractérisé en ce que le support présente, faisant face à un ou plusieurs becs d'arrêt (9), des bossages (20) disposés par paires dans le plan d'une face supérieure de l'élément plat (1) et situés à une distance des becs d'arrêt (9) égale à l'épaisseur de l'élément (1).

7. Système de liaison selon les revendications 1 à 6, caractérisé en ce que les bossages (20) du support (6) sont situés sur les bras d'arrêt (8).

8. Système de liaison selon les revendications 1 à 7, caractérisé en ce que les bossages (20) du support (6) sont prévus de part et d'autre de la plaque d'immobilisation (12) de l'écrou multipans (7).
